# EUROPÄISCHE PATENTSCHRIFT

(11) **EP 2 982 448 B1**
(45) Veröffentlichungstag und Bekanntmachung des Hinweises auf die Patenterteilung: **15.02.2017**
(21) Anmeldenummer: 14179902.3
(22) Anmeldetag: 05.08.2014
(51) Int. Cl.: B07B 13/08, A22C 25/04

(54) **Förder- und Verteilvorrichtung für geschlachtete Fische**
Device for the transportation and distribution of slaughtered fish
Dispositif de répartition et de transport pour poissons abattus

(43) Veröffentlichungstag der Anmeldung: 10.02.2016
(73) Patentinhaber: Nordischer Maschinenbau Rud. Baader GmbH + Co. KG, 23560 Lübeck (DE)
(72) Erfinder: Jacobsen, Ulf, 23611 Bad Schwartau (DE)
(74) Vertreter: Stork Bamberger

(56) Entgegenhaltungen:
- CA-C- 2 190 453
- GB-A- 2 116 732
- IBtrade foodmachines: "Big Marel Grader/Batcher for sale 8 stations for Whole cod, Haddock, pollack", , 15. Dezember 2012 (2012-12-15), XP054975671, Gefunden im Internet: URL:https://www.youtube.com/watch?v=VC2x00 P2W9s&feature=youtu.be [gefunden am 2015-01-14]

## Beschreibung

Die vorliegende Erfindung betrifft eine Förder- und Verteilvorrichtung zum Zuführen mittels mehrerer Schlachtmaschinen geschlachteter Fische an mindestens eine Verteileinrichtung. Des Weiteren betrifft die Erfindung eine Anordnung zum Verarbeiten von Fischen sowie ein Verfahren zum Fördern und Verteilen mittels mehrerer Schlachtmaschinen geschlachteter Fische.

Derartige Förder- und Verteilvorrichtungen, Anordnungen zum Verarbeiten von Fischen sowie derartige Verfahren kommen insbesondere beim Verarbeiten von Artikeln der fisch- und fleischverarbeitenden Industrie zum Einsatz. Insbesondere bei der Verarbeitung von Fischen, die mittels Schlachtmaschinen geschlachtet und anschließend zu weiteren Be- bzw. Verarbeitungsstationen transportiert Ein Beispiel dieser Art von Vorrichtungen ist beispielsweise aus dem Internet bekannt (IBtrade foodmachines: "Big Marel Grader/Batcher for sale 8 stations ideal for Whole cod, Haddock, pollack..."; https://www.youtube.com/watch?v=VC2x00P2W9).

Die geschlachteten Fische werden mittels Verteileinrichtungen nach verschiedenen Eigenschaften, wie beispielsweise Gewicht, Form, Größe, Länge, Breite, Höhe, Farbe, K-Faktor etc. verteilt. Das Verteilen kann beispielsweise auf verschiedene Behälter oder auf weitere Transportbänder erfolgen.

Sofern die geschlachteten Fische in Abhängigkeit ihres Gewichtes verteilt werden sollen, ist vor der Verteileinheit eine Waage angeordnet, mittels derer die jeweiligen Gewichte der Fische gemessen bzw. erfasst werden. In Abhängigkeit des erfassten Gewichts eines jeden Fisches wird ermittelt, wohin der Fisch zu verteilen ist. Mittels der Verteilvorrichtung werden die Fische in den jeweils vorgesehenen Behälter bzw. auf das jeweils zur Verteilung vorgesehene weitere Transportband geleitet.

Nachteilig bei den bekannten Förder- und Verteilvorrichtungen ist, dass den eingesetzten Wägesystemen am Eingang der Verteileinheit bei hohen Gesamtdurchsätzen nur eine relativ kurze Zeitspanne für die Gewichtserfassung zur Verfügung steht. An derartige Wägesysteme werden daher hohe Anforderungen hinsichtlich deren Mess- und Verarbeitungsgeschwindigkeit gestellt. Der Einsatz von solchen Hochgeschwindigkeits-Wägesystemen ist in der Regel mit hohen Kosten und aufwendiger Messtechnik verbunden und begrenzt die Gesamtkapazität- bzw. die Gesamtdurchsatzleistung auf einen oberen Grenzwert, der durch die maximale Verarbeitungsleistung des einen Wägesystems vorgegeben ist.

Es ist daher Aufgabe der vorliegenden Erfindung, eine kostengünstige Förder- und Verteilvorrichtung mit möglichst hoher Durchsatzleistung zu schaffen. Des Weiteren besteht die Aufgabe darin, ein entsprechendes Verfahren sowie eine entsprechende Anordnung zur Verarbeitung von Fischen vorzuschlagen.

Die Aufgabe wird durch die eingangs genannte Förder- und Verteilvorrichtung gelöst, umfassend den Schlachtmaschinen jeweils nachgeordnete Längsförderer, die eingerichtet sind, die geschlachteten Fische längs in Kopf-Schwanz-Ausrichtung aufzunehmen, wobei die ersten Längsförderer jeweils eine Wägeeinrichtung zum Erfassen des Gewichts der geschlachteten Fische umfassen, an jedem Längsförderer zumindest eine erste Übergabeeinrichtung angeordnet ist, die zum Übergeben der geschlachteten Fische an mindestens einen Querförderer ausgebildet und eingerichtet ist, wobei der mindestens eine Querförderer angepasst ist, die geschlachteten Fische quer zu der Kopf-Schwanz-Ausrichtung aufzunehmen, eine am Ende des Querförderers angeordnete Zuführeinrichtung, die zum Abnehmen der Fische von dem Querförderer und zum Zuführen derselben an eine Verteileinrichtung ausgebildet und eingerichtet ist, und eine Steuereinrichtung, wobei die Steuereinrichtung ein Positionsverfolgungsmittel zum Nachverfolgen der jeweiligen Positionen der geschlachteten Fische sowie ein Zuordnungsmittel zum Zuordnen der erfassten Gewichte zu den jeweiligen nachverfolgten Positionen der geschlachteten Fische umfasst, und wobei die Steuereinrichtung ausgebildet und eingerichtet ist, die Verteileinrichtung auf Basis der erfassten Gewichte beim Eintreffen der geschlachteten Fische an der Verteileinrichtung gemäß einer vorbestimmten Verteilvorschrift zu steuern. Ein besonderer Vorteil der Erfindung besteht darin, dass die Gewichte der geschlachteten Fische mittels der in jedem Längsförderer angeordneten Wägeeinrichtungen unmittelbar hinter jeder der Schlachtmaschinen erfasst werden und die Steuereinrichtung zur Verarbeitung dieser Gewichtsdaten eingerichtet ist. Die Steuereinrichtung ist vorzugsweise weiter dazu ausgebildet, die erfassten Gewichtsdaten mit den Aufenthaltspositionen der geschlachteten Fische in Bezug zu setzen. Mit anderen Worten kennt die Steuerungseinrichtung zu jeder Zeit die aktuelle Position eines jeden der geschlachteten Fische sowie dessen Gewicht.

Unter der Kopf-Schwanz-Ausrichtung im Sinne dieser Erfindung ist die Längsachse der geschlachteten Fische zu verstehen, also eine gedachte Achse, die vom Kopf des Fisches bis zur Schwanzflosse verläuft. Die Längsförderer sind derart eingerichtet, dass die geschlachteten Fische in einer Richtung parallel zu der gedachten Längsachse gefördert werden. Dies umfasst sowohl die Förderung der geschlachteten Fische mit dem Kopfteil voran, als auch die Förderung der Fische mit dem Schwanzteil voran.

Besonders bevorzugt sind zwei oder mehr der Schlachtmaschinen als parallele Produktionslinien nebeneinander angeordnet. Die Gesamtdurchsatzleistung, also die Anzahl der Fische pro Zeiteinheit, ergibt sich daher aus der Summe der Teildurchsatzleistungen jeder der Schlachtmaschinen mit nachgeordnetem Längsförderer.

Aufgrund der Positionsverfolgungsmittel werden die erfassten Gewichte der geschlachteten Fische in jeder der Produktionslinien erfasst und nachverfolgt. Beim Eintreffen der geschlachteten Fische an der Verteileinrichtung, ist der Steuereinrichtung das entsprechende Gewicht des Fisches bereits bekannt. Eine Erfassung der Gewichte der geschlachteten Fische beim Eintreffen an der Verteileinrichtung - wie dies aus dem Stand der Technik bekannt ist - ist daher nicht mehr erforderlich.

Auf diese Weise kann auf den Einsatz einer mit hohen Kosten verbundene Wägeeinrichtung mit hoher Durchsatzleistung verzichtet werden. Ein weiterer Vorteil besteht darin, dass im Falle eines Ausfalls einer oder mehrerer der Wägeeinrichtungen nicht die gesamte Produktionsvorgang stillsteht.

Besonders bevorzugt sind die ersten Längsförderer derart angetrieben, dass die geschlachteten Fische mittels der ersten Übergabeeinrichtung synchronisiert an den Querförderer übergeben werden. Anders ausgedrückt sind die ersten Längsförderer und der mindestens eine Querförderer derart ausgebildet und eingerichtet, dass mehrere der ersten Längsförderer die geschlachteten Fische auf einen der Querförderer zufördern. Die Durchsatzleistung, nämlich die Anzahl der Fische pro Zeiteinheit, des Querförderers entspricht daher vorzugweise der Summe der Einzeldurchsatzleistungen der jeweiligen Schlachtmaschinen bzw. der jeweiligen Längsförderer.

Eine zweckmäßige Ausgestaltung der Erfindung ist dadurch gekennzeichnet, dass das Positionsverfolgungsmittel eingerichtet ist, die Positionen der geschlachteten Fische auf Basis der jeweiligen Fördergeschwindigkeiten der Längs- und Querförderer zu ermitteln. So können auf besonders einfache Art und Weise die Positionen der geschlachteten Fische mittels der Steuereinrichtung nachverfolgt werden. Die Steuereinrichtung ist dazu vorteilhafterweise mit Mitteln zur Erfassung der einzelnen Fördergeschwindigkeiten ausgestattet. Alternativ ist die Steuereinrichtung selbst zur Vorgabe der jeweiligen Fördergeschwindigkeiten ausgebildet und eingerichtet. In beiden Fällen liegen in der Steuereinrichtung Daten vor, die die jeweiligen Fördergeschwindigkeiten repräsentieren. Das Positionsverfolgungsmittel ist ferner eingerichtet, aus, beispielsweise in digitaler Form vorliegenden, Daten zur Geometrie der gesamten Fördervorrichtung die Positionen der geschlachteten Fische in Abhängigkeit der genannten Fördergeschwindigkeiten zu jedem Zeitpunkt exakt zu bestimmen.

Eine bevorzugte Weiterbildung der Erfindung zeichnet sich dadurch aus, dass die Förderkapazität des Querförderers größer oder gleich der Summe der jeweiligen Förderkapazitäten der Längsförderer ist. Unter Förderkapazitäten wird die Anzahl der pro Zeiteinheit geförderten Fische verstanden. Dies bietet den Vorteil, dass jede der Wägeeinrichtungen nur für den Bruchteil der an der Verteileinrichtung vorliegenden Gesamtdurchsatzleistung dimensioniert zu sein braucht. Bezeichnet N die Anzahl der Längsförderer bzw. der Schlachtmaschinen und Dges die Gesamtdurchsatzleistung der Verteileinrichtung, dann beträgt die maximale für jede der Wägeeinrichtungen erforderliche Teildurchsatzleistung D = Dges / N.

Gemäß einer weiteren bevorzugten Ausbildung der Erfindung umfasst zumindest der mindestens eine Querförderer ein Muldenförderband. Das Muldenförderband bietet den Vorteil, dass die geschlachteten Fische relativ zum Muldenförderband im Wesentlichen ortsfest gefördert werden. Ein Verrutschen der geschlachteten Fische ist weitestgehend ausgeschlossen, so dass die Bestimmung der Position der geschlachteten Fische mittels der Positionsverfolgungsmittel mit hoher Exaktheit möglich ist.

Eine weitere zweckmäßige Ausbildung der Erfindung ist dadurch gekennzeichnet, dass die ersten Übergabeeinrichtungen jeweils eine Positionsermittelungseinrichtung zur Erfassung der Übergabe der geschlachteten Fische umfasst und die Steuereinrichtung mit den jeweiligen Positionermittelungseinrichtungen zur Übermittlung der jeweiligen Positionen der geschlachteten Fische verbunden ist. Auf diese Weise ist die Position der Fische exakt feststellbar. Insbesondere lassen sich so mögliche Positionierungsfehler, die beim Fördern der Fische mittels der Längsförderer, beispielsweise durch Schlupferscheinungen, auftreten können, korrigieren. Anders ausgedrückt ist die Steuereinrichtung angepasst, anhand der Positionierungsermittelungseinrichtung jeweils die aktuelle Position der geschlachteten Fische exakt festzustellen.

Gemäß einer weiteren bevorzugten Ausführungsform umfasst die Zuführeinrichtung eine Beschleunigungseinrichtung, die zum Vorbeschleunigen der Fische in Kopf-Schwanz-Richtung eingerichtet ist. Der Beschleunigungseinrichtung ist ein weiterer Längsförderer zum Übernehmen der geschlachteten Fische und Fördern derselben an die Verteileinrichtung nachgeordnet. Die nochmalige Überführung der geschlachteten Fische auf einen weiteren Längsförderer bietet den Vorteil, dass diese in der Verteileinrichtung auf einfache Weise durch Querabförderung verteilt werden können. Mittels der Beschleunigungseinrichtung werden die geschlachteten Fische in die neue Längsförderrichtung vorbeschleunigt und vorzugsweise auf eine Geschwindigkeit beschleunigt, die der Fördergeschwindigkeit des weiteren Längsförderers entspricht. Auf diese Weise werden die geschlachteten Fische schlupffrei auf dem weiteren Längsförderer abgelegt, da am Ausgang der Beschleunigungseinrichtung der Geschwindigkeitsunterschied der geschlachteten Fische gegenüber dem weiteren Längsförderer gegen Null geht.

Des Weiteren wird die Aufgabe durch die eingangs genannten Anordnung gelöst, umfassend mindestens zwei Schlachtmaschinen zum Schlachten von Fischen und mindestens eine Förder- und Verteilvorrichtung nach einem der Ansprüche 1 bis 6 zum Zuführen der mittels der Schlachtmaschinen geschlachteten Fische an mindestens die Verteileinrichtung der Verteilvorrichtung.

Schließlich wird die Aufgabe auch durch das eingangs genannte Verfahren gelöst, umfassend Aufnehmen der geschlachteten Fische in Kopf-Schwanz- Ausrichtung mittels ersten Längsförderern, Erfassen des Gewichts der geschlachteten Fische, Längsfördern der geschlachteten Fische zu einer ersten Übergabeeinrichtung, Übergeben der geschlachteten Fische an mindestens einen Querförderer, Querfördern der geschlachteten Fische quer zu der Kopf-Schwanz-Ausrichtung und Zuführen derselben an eine Verteileinrichtung, Nachverfolgen der jeweiligen Positionen der geschlachteten Fische, Zuordnen der erfassten Gewichte zu den jeweiligen nachverfolgten Positionen, Steuern der Verteileinrichtung auf Basis der erfassten Gewichte beim Eintreffen der geschlachteten Fische an der Verteileinrichtung gemäß einer vorbestimmten Verteilvorschrift.

Eine weitere zweckmäßige Ausgestaltung der Erfindung ist dadurch gekennzeichnet, dass die Positionen der geschlachteten Fische auf Basis der jeweiligen Fördergeschwindigkeiten der Längs- und Querförderer ermittelt werden.

Gemäß einer weiteren bevorzugten Ausbildung der Erfindung erfolgt das Querfördern mit einer Förderkapazität, die größer oder gleich der Summe der jeweiligen Förderkapazitäten beim Längsfördern ist.

Eine weitere bevorzugte Ausgestaltung der Erfindung zeichnet sich dadurch aus, dass das Querfördern mittels eines Muldenförderbandes erfolgt.

Eine zweckmäßige Weiterbildung der Erfindung zeichnet sich dadurch aus, dass beim Übergeben der geschlachteten Fische von der Längs- zur Querförderung an den ersten Übergabeeinrichtungen jeweils die Position der geschlachteten Fische ermittelt wird.

Gemäß einer besonders vorteilhaften Ausgestaltung werden beim Zuführen der geschlachteten Fische an die Verteileinrichtung die geschlachteten Fische zunächst in Kopf-Schwanz-Richtung vorbeschleunigt und in Kopf-Schwanz-Ausrichtung zu der Verteileinrichtung gefördert.

Zur Vermeidung von Wiederholungen wird hinsichtlich der Vorteile des erfindungsgemäßen Verfahrens auf die bereits im Zusammenhang mit der erfindungsgemäßen Vorrichtung beschriebenen Vorteile verwiesen, aus der sich die bereits im Zusammenhang mit der Vorrichtung genannten Vorteile für das Verfahren in analoger Weise ergeben.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. Die Zeichnung zeigt:

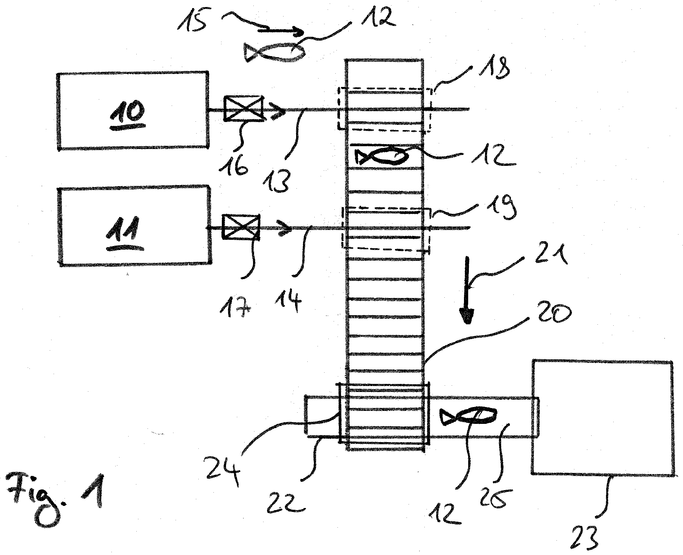

- Fig. 1: eine schematische Ansicht der erfindungsgemäßen Anordnung, die die Förder- und Verteilvorrichtung umfasst.

In der Figur 1 ist die erfindungsgemäße Anordnung sowie die erfindungsgemäße Förder- und Verteilvorrichtung gezeigt. Aus Gründen der besseren Übersichtlichkeit wird im Folgenden auch das erfindungsgemäße Verfahren erläutert.

In der Figur 1 sind beispielhaft zwei Schlachtmaschinen 10, 11 gezeigt. Die vorliegende Erfindung ist jedoch nicht auf zwei der Schlachtmaschinen beschränkt. Vielmehr kann jede beliebe Anzahl größer zwei von Schlachtmaschinen 10, 11 verwendet werden.

Den Schlachtmaschinen 10, 11 werden eingangsseitig - in der Zeichnung nicht gezeigt-jeweils Fische zugeführt. Die geschlachteten Fische 12 verlassen die Schlachtmaschinen 10, 11 ausgangsseitig. Den Schlachtmaschinen sind jeweils Längsförderer 13, 14 nachgeordnet. Die Längsförderer sind vorzugweise dazu eingerichtet, die geschlachteten Fische 12 in Längsrichtung 15 zu fördern. Die Längsrichtung bezeichnet eine gedachte Achse zwischen Kopf und Schwanz der geschlachteten Fische 12.

In der Zeichnung ist gezeigt, dass die geschlachteten Fische 12 die jeweiligen Schlachtmaschinen 10, 11 mit dem Kopf voraus verlassen. Gemäß einer - in der Zeichnung nicht gezeigten - vorteilhaften weiteren Ausgestaltung der Erfindung sind die Schlachtmaschinen 10, 11 derart eingerichtet, dass die geschlachteten Fische 12 die jeweiligen Schlachtmaschinen 10, 11 mit dem Schwanz voraus verlassen. In diesem Fall ist es besonders vorteilhaft, wenn die Schlachtmaschinen 10, 11 und die Verteileinrichtung 23 auf derselben Seite des Querförderers 20 angeordnet sind, so dass die geschlachteten Fische 12 der Verteileinrichtung 23 mit dem Kopf voraus zugeführt werden. Eine entsprechende Anordnung der Schlachtmaschinen 10, 11 ergibt sich aus der Figur 1, wenn die Schlachtmaschinen 10, 11 spiegelbildlich zu dem Querförderer 20 angeordnet sind, so dass die Schlachtmaschinen 10, 11, der Querförderer 20, die Zuführeinrichtung 22 und die Verteileinrichtung U-förmig angeordnet sind.

Vorzugsweise umfassen die ersten Längsförderer 13, 14 jeweils eine Wägeeinrichtung 16, 17. Die Wägeeinrichtungen 16, 17 sind jeweils zum Erfassen des Gewichts der geschlachteten Fische 12 ausgebildet und eingerichtet. Beispielsweise sind die Wägeeinrichtungen 16, 17 analoge oder digitale Waagen, die das Gewicht der geschlachteten Fische 12 im Vorbeifördern messen und in entsprechende analoge oder digitale elektrische Signale umwandeln. Alternativ sind die Wägeeinrichtungen 16, 17 in die jeweiligen Schlachtmaschinen 10, 11 integriert.

An jedem der Längsförderer 13, 14 ist zumindest jeweils eine erste Übergabeeinrichtung 18, 19 angeordnet. Die Übergabeeinrichtungen 18, 19 sind zum Übergeben der geschlachteten Fische 12 an einen Querförderer 20 ausgebildet.

Alternativ sind mehrere Querförderer 20 parallel zueinander angeordnet. Der Querförderer 20 ist derart eingerichtet, dass die geschlachteten Fische nach der Übergabe mittels der Übergabeeinrichtung 18 quer zu der zuvor genannten KopfSchwanz-Ausrichtung gefördert werden. Die entsprechende Querrichtung 21 zeigt die Förderrichtung der geschlachteten Fische 12 nach der Übergabe an.

Am Ende des Querförderers 20 ist eine Zuführeinrichtung 22 angeordnet. Die Zuführeinrichtung 22 ist vorzugsweise dazu eingerichtet, die geschlachteten Fische 12 von dem Querförderer 20 abzunehmen und einer Verteileinrichtung 23 zuzuführen. Die Verteileinrichtung 23 umfasst vorzugsweise - in der Zeichnung nicht gezeigte - gesteuerte Abweiser, mittels derer die geschlachtete Fische 12 beispielsweise auf verschiedene Kästen oder weitere Förderbänder verteilt werden. Derartige Verteileinrichtungen 23 sind aus dem Stand der Technik hinlänglich bekannt, weshalb auf eine weiterführende Beschreibung im Folgenden verzichtet wird.

Eine - in der Figur 1 nicht gezeigte - Steuereinrichtung umfasst einerseits ein Positionsverfolgungsmittel und andererseits Zuordnungsmittel. Die Positionsverfolgungsmittel sind vorzugsweise derart eingerichtet und ausgebildet, dass die jeweilige Position der geschlachteten Fische 12 nachverfolgt wird.

Beispielsweise umfasst das Positionsverfolgungsmittel ein digitales Rechenwerk, mittels dessen aus den bekannten Fördergeschwindigkeiten der Förderer 13, 14, 20 der aktuelle Aufenthaltsort eines jeden der geschlachteten Fische 12 bestimmbar ist.

Alternativ umfassen die Positionsverfolgungsmittel weitere Sensoren, die ausschließlich oder zusätzlich die Positionsbestimmung der geschlachteten Fische 12 erlauben.

Die Zuordnungsmittel sind dazu ausgebildet, die erfassten Gewichte der geschlachteten Fische 12 den jeweiligen nachverfolgten Positionen der geschlachteten Fische 12 zuzuordnen. Mit anderen Worten bilden die Positionsverfolgungs- und die Zuordnungsmittel ein Tracking-System, mittels dessen zu jedem Zeitpunkt der Aufenthaltsort eines jeden der geschlachteten Fische 12 zusammen mit dem jeweils erfassten Gewicht bestimmt wird.

Die Steuereinrichtung ist ferner ausgebildet, die Verteileinrichtung 23 zu steuern. Die Steuerung der Verteileinrichtung 23 erfolgt auf Basis der erfassten Gewichte beim Eintreffen der geschlachteten Fische 12. Hierzu ist, beispielsweise als Datensatz, eine vorbestimmte Verteilvorschrift in der Steuereinrichtung abgelegt. Sollen beispielsweise die geschlachteten Fische 12 nach verschiedenen Gewichtsklassen verteilt werden, so umfasst die Verteilvorschrift die gewünschten Gewichtsklassen, nach der mittels der Steuereinrichtung die Verteileinrichtung 23 anzusteuern ist.

Vorzugsweise umfasst die Steuereinrichtung entsprechende Ein- und Ausgabeschnittstellen, über die einerseits die Wägeeinrichtungen 16, 17 die gemessenen Gewichtsdaten der geschlachteten Fische 12 an die Steuereinrichtung übermitteln und andererseits entsprechende Ausgabeschnittstellen, die der Ansteuerung der Verteilereinrichtung 23 gemäß der Verteilvorschrift dienen.

Vorteilhafter Weise ist das Positionserfassungsmittel derart eingerichtet, dass dieses die Positionen der geschlachteten Fische 12 anhand der Fördergeschwindigkeiten der Längs- und Querförderer ermittelt. Wie eingangs beschriebene existieren verschiedene Möglichkeiten der technischen Realisierung.

Besonders bevorzugt umfassen jeweils die erste Übergabeeinrichtungen 18, 19 jeweils eine Positionsermittlungseinrichtung. Mittels dieser Positionsermittlungseinrichtung wird der Zeitpunkt der Übergabe der geschlachteten Fische 12 und damit deren exakte Position bei der Übergabe erfasst. Die Steuereinrichtung ist mit der Positionsermittlungseinrichtung verbunden, so dass die Ergebnisse der Positionsermittlungseinrichtung in die Positionsbestimmung der geschlachteten Fische 12 mit einfließt. Vorzugsweise ist die Steuereinrichtung als digitale Steuerung, beispielsweise in Form einer Mikroprozessorsteuerung oder als speicherprogrammierbare Steuerung (SPS) ausgebildet.

Gemäß einer weiteren vorteilhaften Ausführungsform umfasst die Zuführeinrichtung 22 eine Beschleunigungseinrichtung 24. Die Beschleunigungseinrichtung 24 ist zum Vorbeschleunigen der geschlachteten Fische 12 in Kopf-Schwanz-Richtung ausgebildet und ausgerichtet. Mit anderen Worten ist die Beschleunigungseinrichtung 24 angepasst, die geschlachteten Fische parallel zu ihrer Kopf-Schwanz-Ausrichtung zu beschleunigen. Auf diese Weise werden die geschlachteten Fische 12 in ihrer Längsrichtung beschleunigt. Besonders bevorzugt werden die geschlachteten Fische auf eine Endgeschwindigkeit beschleunigt, die der Fördergeschwindigkeit eines weiteren Längsförderes 25 entspricht. Der Längsförderer 25 ist dazu eingerichtet, die geschlachteten Fische 12 der Verteileinrichtung zuzuführen.

## Patentansprüche

1. Förder- und Verteilvorrichtung zum Zuführen mittels mehrerer Schlachtmaschinen (10, 11) geschlachteter Fische (12) an mindestens eine Verteileinrichtung (23), umfassend
den Schlachtmaschinen (10, 11) jeweils nachgeordnete Längsförderer (13, 14), die eingerichtet sind, die geschlachteten Fische (12) längs in Kopf-Schwanz-Ausrichtung aufzunehmen, wobei die Längsförderer (13, 14) jeweils eine Wägeeinrichtung (16, 17) zum Erfassen des Gewichts der geschlachteten Fische (12) umfassen,
an jedem der Längsförderer (13, 14) zumindest eine erste Übergabeeinrichtung (18, 19) angeordnet ist, die zum Übergeben der geschlachteten Fische (12) an mindestens einen Querförderer (20) ausgebildet und eingerichtet ist, wobei der mindestens eine Querförderer (20) angepasst ist, die geschlachteten Fische (12) quer zu der Kopf-Schwanz-Ausrichtung aufzunehmen,
eine am Ende des Querförderers (20) angeordnete Zuführeinrichtung (22), die zum Abnehmen der geschlachteten Fische (12) von dem Querförderer (20) und zum Zuführen derselben an eine Verteileinrichtung (23) ausgebildet und eingerichtet ist, und
eine Steuereinrichtung, wobei die Steuereinrichtung ein Positionsverfolgungsmittel zum Nachverfolgen der jeweiligen Positionen der geschlachteten Fische (12) sowie ein Zuordnungsmittel zum Zuordnen der erfassten Gewichte zu den jeweiligen nachverfolgten Positionen der geschlachteten Fische (12) umfasst, und wobei die Steuereinrichtung ausgebildet und eingerichtet ist, die Verteileinrichtung (23) auf Basis der erfassten Gewichte beim Eintreffen der geschlachteten Fische (12) an der Verteileinrichtung (23) gemäß einer vorbestimmten Verteilvorschrift zu steuern.

2. Vorrichtung nach Anspruch 1, **dadurch gekennzeichnet, dass** das Positionsverfolgungsmittel eingerichtet ist, die Positionen der geschlachteten Fische (12) auf Basis der jeweiligen Fördergeschwindigkeiten der Längs- und Querförderer (13, 14, 20) zu ermitteln.

3. Vorrichtung nach einem der Ansprüche 1 oder 2, **dadurch gekennzeichnet, dass** die Förderkapazität des Querförderers (20) größer oder gleich der Summe der jeweiligen Förderkapazitäten der Längsförderer (13, 14) ist.

4. Vorrichtung nach einem der Ansprüche 1 bis 3, **dadurch gekennzeichnet, dass** zumindest der mindestens eine Querförderer (20) ein Muldenförderband umfasst.

5. Vorrichtung nach einem der Ansprüche 1 bis 4, **dadurch gekennzeichnet, dass** jeweils die ersten Übergabeeinrichtungen (18,19) jeweils eine Positionsermittelungseinrichtung zur Erfassung der Übergabe der geschlachteten Fische (12) umfassen und die Steuereinrichtung mit den jeweiligen Positionermittelungseinrichtungen zur Übermittlung der jeweiligen Positionen der geschlachteten Fische (12) verbunden ist.

6. Vorrichtung nach einem der Ansprüche 1 bis 5, **dadurch gekennzeichnet, dass** die Zuführeinrichtung (22) eine Beschleunigungseinrichtung (24), die zum Vorbeschleunigen der geschlachteten Fische (12) in Kopf-Schwanz-Richtung eingerichtet ist, umfasst und der Beschleunigungseinrichtung (24) ein weiterer Längsförderer (25) zum Übernehmen der geschlachteten Fische (12) und Fördern derselben an die Verteileinrichtung (23) nachgeordnet ist.

7. Anordnung zum Verarbeiten von Fischen, umfassend
mindestens zwei Schlachtmaschinen (10, 11) zum Schlachten von Fischen und
mindestens eine Förder- und Verteilvorrichtung nach einem der Ansprüche 1 bis 6 zum Zuführen der mittels der Schlachtmaschinen (10, 11) geschlachteten Fische (12) an mindestens die Verteileinrichtung (23) der Verteilvorrichtung.

8. Verfahren zum Fördern und Verteilen mittels mehrerer Schlachtmaschinen (10, 11) geschlachteter Fische (12), umfassend
Aufnehmen der geschlachteten Fische (12) in Kopf-Schwanz-Ausrichtung mittels Längsförderern (13, 14),
Erfassen des Gewichts der geschlachteten Fische (12),
Längsfördern der geschlachteten Fische (12) zu einer ersten Übergabeeinrichtung (18, 19),
Übergeben der geschlachteten Fische (12) an mindestens einen Querförderer (20),
Querfördern der geschlachteten Fische (12) quer zu der Kopf-Schwanz-Ausrichtung und Zuführen derselben an eine Verteileinrichtung (23), Nachverfolgen der jeweiligen Positionen der geschlachteten Fische (12), Zuordnen der erfassten Gewichte zu den jeweiligen nachverfolgten Positionen,
Steuern der Verteileinrichtung (23) auf Basis der erfassten Gewichte beim Eintreffen der geschlachteten Fische (12) an der Verteileinrichtung (13) gemäß einer vorbestimmten Verteilvorschrift.

9. Verfahren nach Anspruch 8, **dadurch gekennzeichnet, dass** die Positionen der geschlachteten Fische (12) auf Basis der jeweiligen Fördergeschwindigkeiten der Längs- und Querförderer (13, 14, 20) ermittelt werden.

10. Verfahren nach einem der Ansprüche 8 oder 9, **dadurch gekennzeichnet, dass** das Querfördern mit einer Förderkapazität erfolgt, die größer oder gleich der Summe der jeweiligen Förderkapazitäten beim Längsfördern ist.

11. Verfahren nach einem der Ansprüche 8 bis 10, **dadurch gekennzeichnet, dass** das Querfördern mittels eines Muldenförderbandes erfolgt.

12. Verfahren nach einem der Ansprüche 8 bis 11, **dadurch gekennzeichnet, dass** beim Übergeben der geschlachteten Fische (12) von der Längs- zur Querförderung an den ersten Übergabeeinrichtungen (18, 19) jeweils die Position der geschlachteten Fische (12) ermittelt wird.

13. Verfahren nach einem der Ansprüche 8 bis 12, **dadurch gekennzeichnet, dass** beim Zuführen der geschlachteten Fische (12) an die Verteileinrichtung (23) die geschlachteten Fische (12) zunächst in Kopf-Schwanz-Richtung vorbeschleunigt und in der Kopf-Schwanz-Ausrichtung zu der Verteileinrichtung (23) gefördert werden.

## Claims

1. Conveying and distributing apparatus for delivering fish (12) slaughtered by means of a plurality of slaughtering machines(10, 11) to at least one distributing device (23), comprising
longitudinal conveyors (13, 14) downstream of each of the slaughtering machines (10, 11), which are configured to receive the slaughtered fish (12) longitudinally in a head to tail orientation, wherein each of the longitudinal conveyors (13, 14) comprises a weighing device (16, 17) for detecting the weight of the slaughtered fish (12),
at least one first transfer device (18, 19) is arranged on each of the longitudinal conveyors (13, 14), which are designed and configured to transfer the slaughtered fish (12) to at least one transverse conveyor (20), wherein the at least one transverse conveyor (20) is adapted to receive the slaughtered fish (12) transversely with respect to the head to tail orientation,
a feed device (22) arranged on the end of the transverse conveyor (20), which is designed and configured to remove the slaughtered fish (12) from the transverse conveyor (20) and to feed the same to a distributing device (23), and
a control device, wherein the control device comprises a position tracking means for tracking the respective positions of slaughtered fish (12) and an allocation means for allocating the detected weights to the respective tracked positions of the slaughtered fish (12), and wherein the control device is designed and configured to control the distributing device (23) on the basis of the detected weights when the slaughtered fish (12) enter the distributing device (23) according to a predefined distribution rule.

2. Apparatus according to claim 1, **characterised in that** the position tracking means is configured to determine the positions of the slaughtered fish (12) based on the respective conveying speeds of the longitudinal and transverse conveyors (13, 14, 20).

3. Apparatus according to one of claims 1 or 2, **characterised in that** the conveying capacity of the transverse conveyor (20) is greater than or equal to the sum of the respective conveying capacities of the longitudinal conveyors (13, 14).

4. Apparatus according to any one of claims 1 to 3, **characterised in that** at least the at least one transverse conveyor (20) comprises a troughed belt conveyor.

5. Apparatus according to any one of claims 1 to 4, **characterised in that** the first transfer devices (18, 19) respectively each comprise a position determination device for detecting the transfer of the slaughtered fish (12) and the control device is connected to the respective position determination devices for transmitting the respective positions of the slaughtered fish (12).

6. Apparatus according to any one of claims 1 to 5, **characterised in that** the feed device (22) comprises an acceleration device (24), which is configured to preaccelerate the slaughtered fish (12) in a head to tail direction, and a further longitudinal conveyor (25) for transferring the slaughtered fish (12) and conveying the same to the distributing device (23) downstream of the acceleration device (24).

7. Arrangement for processing fish, comprising
at least two slaughtering machines (10, 11) for slaughtering fish and
at least one conveying and distributing apparatus according to any one of claims 1 to 6 for delivering fish (12) slaughtered by means of the slaughtering machines (10, 11) to at least the distributing device (23) of the distributing apparatus.

8. Method for conveying and distributing fish (12) slaughtered by means of a plurality of slaughtering machines (10, 11), comprising
receiving the slaughtered fish (12) in a head to tail orientation by means of longitudinal conveyors (13, 14),
detecting the weight of the slaughtered fish (12),
longitudinally conveying the slaughtered fish (12) to a first transfer device (18, 19),
transferring the slaughtered fish (12) to at least one transverse conveyor (20), transversely conveying the slaughtered fish (12) transversely with respect to the head to tail orientation and feeding the same to a distributing device (23),
tracking the respective positions of the slaughtered fish (12),
allocating the detected weights to the respective tracked positions,
controlling the distributing device (23) on the basis of the detected weights when the slaughtered fish (12) enter the distributing device (13) according to a predefined distribution rule.

9. Method according to claim 8, **characterised in that** the positions of the slaughtered fish (12) are determined based on the respective conveying speeds of the longitudinal and transverse conveyors (13, 14, 20).

10. Method according to one of claims 8 or 9, **characterised in that** transverse conveying is effected with a conveying capacity which is greater than or equal to the sum of the respective conveying capacities during longitudinal conveying.

11. Method according to any one of claims 8 to 10, **characterised in that** transverse conveying is effected by means of a troughed belt conveyor.

12. Method according to any one of claims 8 to 11, **characterised in that**, on transferring the slaughtered fish (12) from longitudinal to transverse conveying, the respective position of the slaughtered fish (12) is determined at the first transfer devices (18, 19).

13. Method according to any one of claims 8 to 12, **characterised in that** on feeding the slaughtered fish (12) to the distributing device (23), the slaughtered fish (12) are initially pre-accelerated in a head to tail direction and conveyed to the distributing device (23) in the head to tail orientation.

## Revendications

1. Un dispositif de transport et de distribution pour transporter des poissons abattus (12) au moyen de plusieurs éviscéreuses (10, 11) jusqu'à au moins une installation de distribution (23), les éviscéreuses (10, 11) comprenant respectivement des convoyeurs longitudinaux (13, 14) placés en amont et agencés de façon à prélever les poissons abattus (12) dans le sens de la longueur, et orientés de la tête à la queue, dans lequel les convoyeurs longitudinaux (13, 14) comprennent respectivement un dispositif de pesage (16, 17) pour saisir le poids des poissons abattus (12), et chaque convoyeur longitudinal (13, 14) comprend au moins un premier dispositif de transfert (18, 19) conçu et disposé de façon à remettre les poissons abattus (12) à au moins un convoyeur transversal (20), dans lequel le ou les convoyeurs transversaux (20) sont ajustés de façon à prélever les poissons abattus (12) en travers par rapport à leur orientation tête/queue, et un dispositif d'alimentation (22) positionné à l'une des extrémités du convoyeur transversal (20) est conçu et disposé de façon à prélever les poissons abattus (12) sur le convoyeur transversal (20) et à les transporter jusqu'à une installation de distribution (23), ainsi qu'un dispositif de commande, dans lequel le dispositif de commande comprend un moyen de suivi de la position permettant d'assurer un suivi des positions respectives des poissons abattus (12) ainsi qu'un moyen d'attribution permettant d'attribuer les poids saisis aux positions suivies des poissons abattus (12), et dans lequel le dispositif de commande est conçu et disposé de façon à commander l'installation de distribution (23) en se basant sur les poids saisis lors de l'arrivée des poissons abattus (12) dans l'installation de distribution (23) selon des consignes de distributions prédéfinies.

2. Un dispositif selon la revendication 1, **caractérisé en ce que** le dispositif de suivi de la position est monté de façon à déterminer la position des poissons abattus (12) en se basant sur la vitesse d'alimentation respective des convoyeurs longitudinaux et transversaux (13, 14, 20).

3. Un dispositif selon l'une des revendications 1 ou 2, **caractérisé en ce que** la capacité d'alimentation du convoyeur transversal (20) est supérieure ou égale à la somme des capacités d'alimentation respectives des convoyeurs longitudinaux (13, 14).

4. Un dispositif selon l'une des revendications 1 à 3, **caractérisé en ce qu'**au moins le ou les convoyeurs transversaux (20) comprennent une bande transporteuse en auge.

5. Un dispositif selon l'une des revendications 1 à 4, **caractérisé en ce que** les premiers dispositifs de transfert respectifs (18, 19) comprennent respectivement un dispositif de détermination de la position permettant de saisir le transfert du poisson abattu (12) et le dispositif de commande est lié aux dispositifs de détermination de la position respectifs pour la détermination des positions respectives des poissons abattus (12).

6. Un dispositif selon l'une des revendications 1 à 5, **caractérisé en ce que** le dispositif d'alimentation (22) comprend un dispositif accélérateur (24) servant à pré-accélérer les poissons abattus (12) dans la direction tête/queue, et le dispositif accélérateur (24) est suivi d'un autre convoyeur transversal (25) servant à prélever les poissons abattus (12) et à les transporter jusqu'à l'installation de distribution (23).

7. Un agencement pour le traitement des poissons, comprenant au moins deux éviscéreuses (10, 11) pour l'abattage des poissons et
au moins un dispositif de transport et de distribution selon l'une des revendications 1 à 6 pour transporter le poisson abattu (12) à l'aide des éviscéreuses (10, 11) jusqu'à au moins l'installation de distribution (23) du dispositif de distribution.

8. Un procédé de transport et de distribution des poissons abattus (12) à l'aide de plusieurs éviscéreuses (10, 11), comprenant
le prélèvement des poissons abattus (12) en direction tête/queue à l'aide de convoyeurs transversaux (13, 14),
la saisie du poids des poissons abattus (12),
le convoyage longitudinal des poissons abattus (12) jusqu'à un premier dispositif de transfert (18, 19),
la remise des poissons abattus (12) à au moins un convoyeur transversal (20),
le convoyage transversal des poissons abattus (12) en travers de leur orientation tête/queue et le transport de ces derniers jusqu'à une installation de distribution (23),
le suivi des positions respectives des poissons abattus (12),
l'attribution des poids saisis aux positions suivies respectives,
la commande de l'installation de distribution (23) en se basant sur les poids saisis lors de l'arrivée des poissons abattus (12) dans l'installation de distribution (13) selon des consignes de distribution prédéfinies.

9. Un procédé selon la revendication 8, **caractérisé en ce que** les positions des poissons abattus (12) sont déterminées en se basant sur la vitesse d'alimentation respective des convoyeurs longitudinaux et transversaux (13, 14, 20).

10. Un procédé selon l'une des revendications 8 ou 9, **caractérisé en ce que** l'alimentation transversale est dotée d'une capacité d'alimentation supérieure ou égale à la somme des capacités d'alimentation respectives des convoyeurs longitudinaux.

11. Un procédé selon l'une des revendications 8 à 10, **caractérisé en ce que** le convoyage transversal est assuré par une bande transporteuse en auge.

12. Un procédé selon l'une des revendications 8 à 11, **caractérisé en ce que** la position du poisson abattu (12) est déterminée respectivement au niveau des premiers dispositifs de transfert (18, 19) lors de la remise des poissons abattus (12) du convoyeur longitudinal au convoyeur transversal.

13. Un procédé selon l'une des revendications 8 à 12, **caractérisé en ce que** les poissons abattus (12) sont d'abord pré-accélérés dans la direction tête/queue puis transmis à l'installation de distribution (23) dans la direction tête/queue lors du transport des poissons abattus (12) jusqu'à l'installation de distribution (23).
